(19) Europäisches Patentamt
European Patent Office
Office européen des brevets

(11) **EP 3 542 318 B1**

(12) **EUROPÄISCHE PATENTSCHRIFT**

(45) Veröffentlichungstag und Bekanntmachung des Hinweises auf die Patenterteilung:
**08.11.2023 Patentblatt 2023/45**

(21) Anmeldenummer: **17761494.8**

(22) Anmeldetag: **04.09.2017**

(51) Internationale Patentklassifikation (IPC):
**G06N 3/063** *(2023.01)* **G06N 7/00** *(2023.01)*
**F02D 41/14** *(2006.01)*

(52) Gemeinsame Patentklassifikation (CPC):
**G06N 3/063; F02D 41/1405; G05B 13/027;**
F02D 2041/1433; G06N 7/01

(86) Internationale Anmeldenummer:
**PCT/EP2017/072058**

(87) Internationale Veröffentlichungsnummer:
**WO 2018/046425 (15.03.2018 Gazette 2018/11)**

(54) **MODELLBERECHNUNGSEINHEIT UND STEUERGERÄT ZUR BERECHNUNG EINER NEURONENSCHICHT EINES MEHRSCHICHTIGEN PERZEPTRONENMODELLS**

MODEL-COMPUTATION-UNIT AND CONTROLLER FOR THE OPTIONAL CALCUALTION OF A RBF-MODEL, A GAUSIANS-PROCESS-MODEL AND A MLP-MODEL

UNITÉ DE CALCUL-MODÈLE ET CONTRÔLEUR POUR LE CALCUL OPTIONNEL D'UN MODÈLE RBF, D'UN MODÈLE PROCESSUS GAUSSIEN ET D'UN MODÈLE MLP

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2016 DE 102016216946**

(43) Veröffentlichungstag der Anmeldung:
**25.09.2019 Patentblatt 2019/39**

(73) Patentinhaber: **Robert Bosch GmbH**
**70442 Stuttgart (DE)**

(72) Erfinder:
• **MARKERT, Heiner**
**70178 Stuttgart (DE)**
• **GUNTORO, Andre**
**71263 Weil Der Stadt (DE)**
• **SCHIEGG, Martin**
**70825 Korntal-Muenchingen (DE)**
• **KLOPPENBURG, Ernst**
**71254 Ditzingen (DE)**

• **EPPLER W ET AL: "High speed neural network chip for trigger purposes in high energy physics", DESIGN, AUTOMATION AND TEST IN EUROPE, 1998., PROCEEDINGS PARIS, FRANCE 23-26 FEB. 1998, LOS ALAMITOS, CA, USA,IEEE COMPUT. SOC, US, 23. Februar 1998 (1998-02-23), Seiten 108-115, XP010268412, DOI: 10.1109/DATE.1998.655844 ISBN: 978-0-8186-8359-6**
• **RICHARD FIIFI TURKSON ET AL: "Artificial neural network applications in the calibration of spark-ignition engines: An overview", ENGINEERING SCIENCE AND TECHNOLOGY, AN INTERNATIONAL JOURNAL, Bd. 19, Nr. 3, 16. April 2016 (2016-04-16) , Seiten 1346-1359, XP055420859, ISSN: 2215-0986, DOI: 10.1016/j.jestch.2016.03.003**
• **- - -: "Introduction to Interpolated Neural Networks", APR Power White paper, 18. Januar 2009 (2009-01-18), Seiten 1-57, XP055420876, Gefunden im Internet: URL:http://www.aprpower.com/pdfs/APR Introduction to Interpolated Neural Networks_00.pdf [gefunden am 2017-11-01]**

(56) Entgegenhaltungen:
**DE-A1-102013 220 432**

**Beschreibung**

Technisches Gebiet

Die Erfindung betrifft die Berechnung von Funktionsmodellen in einer separaten hartverdrahteten Modellberechnungseinheit, insbesondere zur Berechnung von mehrschichtigen Perzeptronenmodellen.

Technischer Hintergrund

Funktionen von Steuerungen von technischen Systemen, wie z.B. Verbrennungsmotoren, Elektroantrieben, Batteriespeicher und dergleichen, werden häufig mit Modellen realisiert, die ein mathematisches Abbild des realen Systems darstellen. Jedoch mangelt es bei physikalischen Modellen, insbesondere bei komplexen Zusammenhängen, an der erforderlichen Berechnungsgenauigkeit, und es ist bei heutigen Rechenkapazitäten in der Regel schwierig, derartige Modelle innerhalb der für ein Steuergerät geforderten Echtzeitanforderungen zu berechnen. Für solche Fälle ist angedacht, datenbasierte Modelle zu verwenden, die Zusammenhänge zwischen einer Ausgangsgröße und Eingangsgrößen ausschließlich auf der Basis von mit Hilfe eines Prüfstands oder dergleichen erhaltenen Trainingsdaten beschreiben. Insbesondere eignen sich datenbasierte Modelle zum Modellieren von komplexen Zusammenhängen, bei denen mehrere Eingangsgrößen, zwischen denen Wechselbeziehungen bestehen, in geeigneter Weise in dem Modell berücksichtigt werden. Zudem bietet die Modellierung mit Hilfe von datenbasierten Modellen die Möglichkeit, das Modell durch Hinzufügen von einzelnen Eingangsgrößen zu ergänzen.

Datenbasierte Funktionsmodelle basieren in der Regel auf einer großen Anzahl von Stützstellen, um eine für die jeweilige Anwendung ausreichende Modellierungsgenauigkeit zu erreichen. Aufgrund der hohen Anzahl der Stützstellen wird zur Berechnung eines Modellwertes mit einem datenbasierten Funktionsmodell, wie beispielsweise einem Gauß-Prozess-Modell, eine hohe Rechenkapazität benötigt. Um ein derartiges datenbasiertes Funktionsmodell in einer Steuergeräteanwendung in Echtzeit berechnen zu können, können daher auf einer Hardwareausgestaltung basierende Modellberechnungseinheiten vorgesehen sein. Das Dokument TURKSON ET AL., "Artificial neural network applications in the calibration of spark-ignition engines: An overview",ENGINEERING SCIENC AND TECHNOLOGY, AN INTERNATIONAL JOURNAL, Bd. 19, Nr. 3, 16. April 2016, Seiten 1346-1359, beschreibt die Verwendung eines Steuergeräts zur Steuerung eines Motorsystems in einem Kraftfahrzeug und auch führt das Modell mehrschichtiges Perzeptron auf. Das Dokument EPPLER ET AL., "High speed neural network chip for trigger purposes in high energy physics", DESIGN, AUTOMATION AND TEST IN EUROPE, 1998, PROCEEDINGS PARIS, FRANCE, 23-26 FEB. 1998, LOS ALAMITOS, CA, USA, IEEE COMPUT. SOC, US, 23. Februar 1998, Seiten 108-115, beschreibt einen für jedes Neuron vorgegebenen Offsetwert.

Offenbarung der Erfindung

Die Erfindung wird im unabhängigen Anspruch 1 angegeben.
Weitere Ausgestaltungen sind in den abhängigen Ansprüchen angegeben.
Die Modellberechnungseinheit des Anspruch 1 sieht vor, eine Schicht eines mehrschichtigen Perzeptronenmodells (MLP-Modells) mit einer variablen Anzahl von Neuronen zu berechnen.
Gemäß einem ersten Aspekt ist eine Modellberechnungseinheit zur Berechnung einer Schicht eines mehrschichtigen Perzeptronenmodells mit einem in Hardware ausgebildeten fest verdrahteten Rechenkern zur Berechnung eines fest vorgegebenen Rechenalgorithmus in gekoppelten Funktionsblöcken vorgesehen, wobei der Rechenkern ausgebildet ist, um für eine Neuronenschicht eines mehrschichtigen Perzeptronenmodells mit einer Anzahl von Neuronen abhängig von einer oder mehreren Eingangsgrößen eines Eingangsgrößenvektors, von einer Gewichtungsmatrix mit Gewichtungsfaktoren und einem für jedes Neuron vorgegebenen Offsetwert eine Ausgangsgröße für jedes Neuron zu berechnen, wobei für jedes Neuron eine Summe der mit einem durch das Neuron und die Eingangsgröße bestimmten Gewichtungsfaktor gewichteten Werte der Eingangsgrößen und dem dem Neuron vorgegebenen Offsetwert berechnet wird und auf das Ergebnis mit einer Aktivierungsfunktion transformiert wird, um die Ausgangsgröße für das Neuron zu erhalten.
Eine Idee der obigen Modellberechnungseinheit besteht darin, diese zur Berechnung einer Schicht eines mehrschichtigen Perzeptronenmodells in Hardwarestrukturen separat in einem Rechenkern in einem Steuergerät auszubilden. Auf diese Weise kann eine im Wesentlichen fest verdrahtete Hardwareschaltung zur Realisierung von Funktionen bereitgestellt werden, die es ermöglicht, eine oder mehrere Neuronenschichten eines mehrschichtigen Perzeptronenmodells zu berechnen und dabei nur eine sehr geringe Rechenlast in einem softwaregesteuerten Mikroprozessor eines Steuergeräts zu bewirken. Durch die Hardwarebeschleunigung, die durch die Modellberechnungseinheit bereitgestellt wird, kann ein mehrschichtiges Perzeptronenmodell in Echtzeit berechnet werden, so dass die Verwendung eines solchen Modells für Steuergeräteanwendungen für Verbrennungsmotoren in Kraftfahrzeugen interessant wird.

Zudem ermöglicht die Verwendung von mehrschichtigen Perzeptronenmodellen eine datenbasierte Modellierung mit einer geringeren Anzahl von Stützstellenpunkten als bei vergleichbaren datenbasierten Modellen, wie beispielsweise einem Gauß-Prozess-Modell.

Die Modellberechnungseinheit kann mit Schnittstellen ausgestattet sein, um das MLP-Modell schichtweise zu berechnen, so dass die Anzahl der Neuronenschichten und die Anzahl der Neuronen in jeder Neuronenschicht frei gewählt werden kann. Durch diese schichtweise Aufteilung können die Parameter, wie beispielsweise die Synapsengewichtungen, für jede Neuronenschicht separat vorgegeben werden.

Weiterhin kann der Rechenkern eine Zustandsmaschine, einen Speicher zum Speichern der einen oder mehreren Eingangsgrößen des Eingangsgrößenvektors, der Gewichtungsmatrix, der für jedes Neuron vorgegebenen Offsetwerten und der Ausgangsgrößen für jedes Neuron, einen oder mehrere Rechenoperationsblöcke, insbesondere einem MAC-Block (für Festkomma- oder Gleitkomma-Berechnungen) und einem Aktivierungsfunktions-Berechnungsblock, umfassen.

Es kann vorgesehen sein, dass der Rechenkern ausgebildet ist, um abhängig von einer Auswahlgröße die Art der Aktivierungsfunktion für das mehrschichtigen Perzeptronen-Modells auszuwählen und/oder mithilfe einer weiteren Auswahlgröße auszuwählen, ob ein Gaußprozessmodell bzw. ein RBF-Modell oder eine Neuronenschicht des Perzeptronenmodells berechnet werden soll.

Die Aktivierungsfunktionen kann beispielsweise eine Knickfunktion, eine Sigmoidfunktion, eine Tangens-Hyberbolicus-Funktion oder eine lineare Funktion umfassen. Weiterhin kann der Rechenkern in einem Flächenbereich eines integrierten Bausteins ausgebildet sein.

Gemäß der Erfindung ist ein Steuergerät mit einem Mikroprozessor und der obigen Modellberechnungseinheit vorgesehen. Insbesondere kann das Steuergerät als eine integrierte Schaltung ausgebildet sein.

Die Erfindung nach Anspruch 1 betrifft die Verwendung des obigen Steuergeräts als ein Steuergerät zur Steuerung eines Motorsystems in einem Kraftfahrzeug.

Kurzbeschreibung der Zeichnungen

Ausführungsformen werden nachfolgend anhand der beigefügten Zeichnungen näher erläutert. Es zeigen:

| | |
|---|---|
| Figur 1 | eine schematische Darstellung eines Steuergeräts zum Einsatz für ein Motorsystem in einem Kraftfahrzeugs; |
| Figur 2 | eine schematische Darstellung einer Berechnungseinheit als Teil des Steuergeräts; |
| Figur 3 | eine schematische Darstellung einer Neuronenschicht eines MLP-Modells; und |
| Figuren 4a -4d | Darstellungen von möglichen Aktivierungsfunktionen. |

Beschreibung von Ausführungsformen

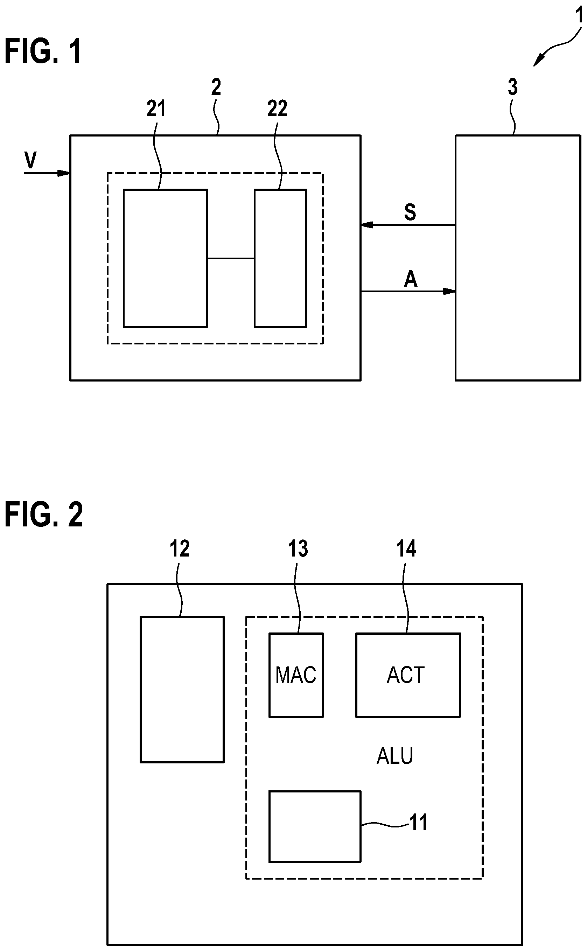

Figur 1 zeigt beispielhaft eine schematische Darstellung eines Steuergeräts 2 für ein Motorsystem 1 mit einem Verbrennungsmotor 3 als ein zu steuerndes technisches System. Das Steuergerät 2 umfasst einen Mikroprozessor 21 und eine Modellberechnungseinheit 22, die als separate Bauteile oder in integrierter Weise in separaten Flächenbereichen auf einem Chip ausgebildet sein können. Insbesondere stellt die Modellberechnungseinheit 22 eine Hardwareschaltung dar, die strukturell von einem Rechenkern des Mikroprozessors 21 getrennt sein kann.

Die Modellberechnungseinheit 22 ist im Wesentlichen hartverdrahtet und dementsprechend nicht wie der Mikroprozessor 21 dazu ausgebildet, einen Softwarecode auszuführen und dadurch eine variable durch Software vorgegebene Funktion auszuführen. Mit anderen Worten ist in der Modellberechnungseinheit 22 kein Prozessor vorgesehen, so dass diese nicht durch einen Softwarecode betreibbar ist. Durch die Fokussierung auf eine vorgegebene Modellfunktion wird eine ressourcenoptimierte Realisierung einer solchen Modellberechnungseinheit 22 ermöglicht. In integrierter Aufbauweise kann die Modellberechnungseinheit 22 flächenoptimiert realisiert werden, die zudem schnelle Berechnungen ermöglicht.

Das Steuergerät 2 dient im Wesentlichen dazu, Sensorsignale S bzw. Sensorgrö-ßen, die von einer Sensorik in dem Verbrennungsmotor 3 erfasst werden, und/oder externe Vorgaben V zu verarbeiten und zyklisch in fest vorgegebenen Zeitabständen von z.B. 1 - 100ms oder Winkelsynchron in Abhängigkeit zu einem Kurbelwellenwinkel eines betriebenen Verbrennungsmotors, Werte von einer oder mehreren entsprechenden Ansteuergrößen A an den Verbrennungsmotor 3 anzulegen, so dass dieser in an sich bekannter Weise betreibbar ist.

In Figur 2 ist eine Modellberechnungseinheit 22 ausführlicher dargestellt. Die Modellberechnungseinheit 22 umfasst eine Zustandsmaschine 11, einen Speicher 12 und einen oder mehrere Operationsblöcke, die beispielsweise einen oder mehreren MAC-Blöcke 13 (MAC: Multiply-ACcumulate für Festkommaberechnung oder FMA: Fused-Multiply-Add für Gleitkommaberechnung) und einen Aktivierungsfunktion-Berechnungsblock (ACT) 14 zur Berechnung einer Aktivierungsfunktion. Die Zustandsmaschine 11 und der eine oder die mehreren Operationsblöcke 13, 14 bilden einen Rechenkern ALU der Modellberechnungseinheit 22. Die Operationsblöcke können zusätzlich oder alternativ zu dem MAC-Block einen Multiplizierblock und einen Additionsblock umfassen.

Mit Hilfe der Zustandsmaschine 11 können in einem Eingangsgrößenspeicherbereich dem Speicher 12 abgelegte Werte von Eingangsgrößen durch wiederholte Schleifenberechnungen verrechnet werden, um Zwischengrößen bzw. Ausgangsgrößen zu erhalten, die in einen entsprechenden Ausgangsgrößenspeicherbereich des Speichers 12 geschrieben werden.

Die Zustandsmaschine 11 ist so ausgelegt, um eine einzelne Neuronenschicht eines mehrschichtigen Perzeptronenmodells zu berechnen. Die Zustandsmaschine 11 kann anhand des nachfolgenden Pseudocodes beschrieben werden:

```
/* Eingangstransformation */
for (k=0; k<p7; k++) {
  ut[k] = u[k] * p1[k] + p2[k];
}

/* Schleifenberechnung */
for (j=p8; j<p6; j++) {
  i = j * p7;
  t = p3[j];
  for (k=0; k<p7; k++) {
    t += V[i+k] * ut[k];
  }
  y[j] = act(t);
}

/* Ausgangstransformation */
for (k=0; k<p6; k++) {
  z[k] = y[k] * p4[k] + p5[k];
}
```

Mit

| | |
|---|---|
| p7: | maximaler Indexwert für die Eingangsgrößen des Eingangsgrößenvektors |
| p8: | minimaler Indexwert bzw. Anfangswert für die Anzahl der Neuronen |
| p6: | maximaler Indexwert für die Anzahl der Neuronen |
| p3: | Offsetwert |
| p1, p2: | Variablen für die Eingangstransformation |
| p4, p5: | Variablen für die Ausgangstransformation |

Mit Hilfe des obigen Pseudocodes lässt sich folgende Berechnung für jedes Neuron der zu berechnenden Neuronenschicht durchführen:

$$y[j] = act\left(p3[j] + \sum_{k=0}^{p7-1} v_{j,k} * ut[k]\right) \text{ für j=0...p6-1}$$

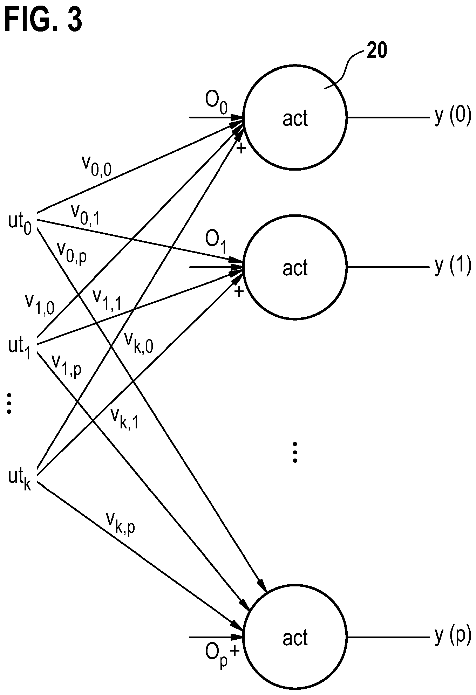

Dieses stellt eine Berechnung für eine Neuronenschicht eines mehrschichtigen Perzeptronenmodells dar, wie es in Figur 3 dargestellt ist.

Figur 3 zeigt eine Neuronenschicht von mehreren Neuronen 20, denen Werte von Eingangsgrößen eines Eingangsgrößenvektors $ut_0$ ... $ut_{p6-1}$ zugeführt werden. Die Werte der Eingangsgrößen werden mit Hilfe einer entsprechenden vorgegebenen Gewichtungsmatrix aus Gewichtungswerten gewichtet, die als Gewichtungsfaktoren $v_{0...p7-1,0...p6-1}$ vorgegeben sind. Die Gewichtung erfolgt in der Regel durch multiplikatives Beaufschlagen mit den zugeordneten Gewichtungsfaktoren $v_{0...p7-1,0...p6-1}$, kann jedoch auch in anderer Weise die Werte des Eingangsgrößenvektors beaufschlagen.

Die Summen der gewichteten Werte des Eingangsgrößenvektors $ut_0$ ... $ut_{p6-1}$ werden jeweils mit einem Offsetwert $O_0$ ... $O_{p6-1}$ beaufschlagt, insbesondere additiv beaufschlagt. Das Ergebnis wird mit einer vorgegebenen Aktivierungsfunktion "act" transformiert. Als Ergebnis erhält man einen entsprechenden Wert eines Ausgangsgrößenvektors $y_0$ ... $y_{p6-1}$. Durch das Vorsehen des Offsetwerts für jedes Neuron besteht ein weiterer Freiheitsgrad für die Modellbildung.

Durch Festlegen der Laufvariablen p6 kann die Anzahl der Neuronen 20 der zu berechnenden Neuronenschicht eingestellt werden. Ein mehrschichtiges Perzeptronenmodell kann durch Verwenden der Werte des Ausgangsgrößenvektors $y_0 ... y_{p6-1}$ einer Neuronenschicht als Eingangsgrößenvektor für eine Berechnung einer nachfolgenden Neuronenschicht in der Modellberechnungseinheit 22 verwendet werden, so dass die Anzahl der Neuronenschichten des mehrschichtigen Perzeptronenmodells durch wiederholtes Aufrufen der Funktion gemäß dem obigen Pseudocode bzw. durch wiederholtes Aufrufen der Modellberechnungseinheit 22 mit entsprechend geänderten Parametern realisiert werden kann.

Es kann eine Eingangs- und/oder Ausgangstransformation der Eingangsgrößen des Eingangsgrößenvektors bzw. der Ausgangsgrößen des Ausgangsgrößenvektors mithilfe der für jedes Neuron vorgegebenen Normierungsvariablen p1 und p2 bzw. p4 und p5 vorgenommen werden.

Die schichtweise Berechnung des MLP-Modells ermöglicht eine schlanke Ausgestaltung der Modellberechnungseinheit 22, so dass deren Flächenbedarf in integrierter Bauweise gering ist. Trotzdem ermöglicht die Modellberechnungseinheit 22 eine Berechnung eines mehrschichtigen Perzeptronenmodells in einfacher Weise durch Rückführung oder Umdefinition der Werte der Ausgangsgrößen des Ausgangsgrö-ßenvektors als Eingangsgrößen eines Eingangsgrößenvektors für die Berechnung einer weiteren Neuronenschicht.

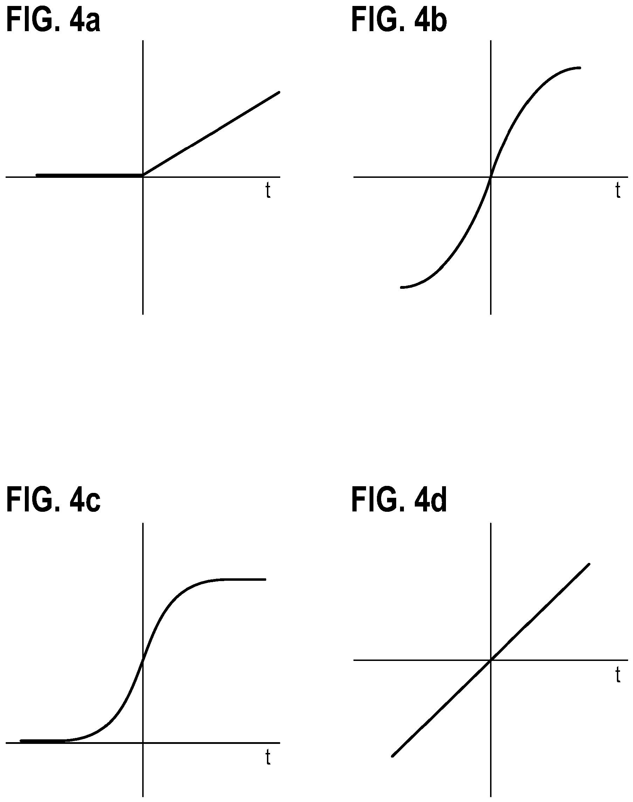

Als Aktivierungsfunktion "act" kann eine von mehreren Aktivierungsfunktionen zur Verfügung gestellt werden, die durch den Aktivierungsfunktion-Berechnungsblock 14 der Modellberechnungseinheit 22 berechnet werden kann. Die Aktivierungsfunktionen können beispielsweise eine Knickfunktion, eine Sigmoidfunktion, eine Tangens-Hyberbolicus-Funktion oder eine lineare Funktion verwendet werden, wie sie in den Figuren 4a bis 4d entsprechend dargestellt sind.

Durch die einschichtige Ausbildung des Neuronenmodells, das durch den obigen Pseudocode realisiert wird, ist es zudem möglich, durch einfache Modifikation neben einer Neuronenschicht eines MLP-Modells auch ein Gauß-Prozess-Modell bzw. ein RBF-Modell (RBF: Radiale Basisfunktion) zu berechnen. Dazu werden die Gewichtungswerte nicht multiplikativ auf die Werte der Eingangsgröße beaufschlagt, sondern additiv bzw. subtraktiv. Weiterhin wird der quadratische Abstand gerechnet, der mit vorgegebenen Längenskalen L[k] gewichtet ist. Weiterhin wird für das RBF-Modell als Aktivierungsfunktion eine Exponentialfunktion gewählt. Somit lässt sich ein Gauß-Prozess-Modell entsprechend

$$y = \sum_{j=0}^{p6-1} p3[j] \cdot exp\left(-\sum_{k=0}^{p7-1} L[k] \cdot (-v_{j,k} + ut[k])^2\right)$$

durch eine Modifikation des Pseudocodes wahlweise wie folgt berechnen.

```
/* Eingangstransformation */
for (k=0; k<p7; k++) {
  ut[k] = u[k]*p1[k] + p2[k];
}

/* Schleifenberechnung */
for (j=p8; j<p6; j++) {
  i = j * p7;
  t = (cfg_mlp) ? p3[j] : 0.0f; // init with bias for MLP
  for (k=0; k<p7; k++) {
    if (cfg_mlp) {
      t += V[i+k] * ut[k];
    }
    else {
      d = V[i+k] - ut[k];
      d = d * d;
      t += L[k] * d
    }
  }
  if (cfg_mlp) {
    switch (cfg_activation_function) {
    case 1:
      e = (t>=0.0f) ? t : 0.0f; // Knickfunktion
      break;
    case 2:  // Sigmoid-Funktion
      e = sigmoid(t);
      break;
    case 3: // tanh-Funktion
      e =  tanh(t);
      break;
    default: // lineare Funktion
      e = t;
    }
    y[j] = e;
  }
  else { // für Gaussprozessmodell/RBF-Modell
    e = exp(-t);
    y[0] += p3[j] * e;
  }

/* Ausgangstransformation */
j = (cfg_mlp) ? p6 : 1;
for (k=0; k<j; k++) {
  z[k] = y[k] * p4[k] + p5[k];
}
```

Man erkennt, dass bei der Durchführung der Schleifenfunktion durch die Variable cfg_mlp eine Fallunterscheidung durchgeführt werden kann. Bei cfg_mlp=1 wird die Berechnung der Neuronenschicht gewählt und es kann mit cfg_activation_function =0...3 die Art der oben beschriebenen Aktivierungsfunktionen ausgewählt werden.

Bei cfg_mlp=0 wird ein Gaußprozessmodell oder ein RBF-Modell berechnet. Hier ist eine Auswahl der Aktivierungsfunktion nicht notwendig, da diese stets mit der Exponentialfunktion gerechnet werden. Auf diese Weise ist es möglich, die Modellberechnungseinheit 22 sowohl für die Berechnung von Gauß-Prozess-Modellen und RBF-Modellen als auch für die Berechnung einer Neuronenschicht eines MLP-Modells zu verwenden und dabei einen nur geringen Flächenbedarf in integrierter Bauweise der Zustandsmaschine zu benötigen.

**Patentansprüche**

1. Verwendung eines Steuergeräts (2) mit einem Mikroprozessor (21) und einer oder mehreren Modellberechnungseinheiten (22) als ein Steuergerät (2) zur Steuerung eines Motorsystems (1) in einem Kraftfahrzeug,

   wobei die Modellberechnungseinheit (22) zur Berechnung einer Schicht eines mehrschichtigen Perzeptronenmodells mit einem in Hardware ausgebildeten fest verdrahteten Rechenkern zur Berechnung eines fest vorgegebenen Rechenalgorithmus in gekoppelten Funktionsblöcken,
wobei der Rechenkern ausgebildet ist, um für eine Neuronenschicht eines mehrschichtigen Perzeptronenmodells mit einer Anzahl von Neuronen (20) abhängig von einer oder mehreren Eingangsgrößen eines Eingangsgrößenvektors (ut), von einer Gewichtungsmatrix mit Gewichtungsfaktoren und einen für jedes Neuron (20) vorgegebenen Offsetwert (p3[j]) eine Ausgangsgröße für jedes Neuron (20) zu berechnen, wobei für jedes Neuron (20) eine Summe der mit einem durch das Neuron (20) und die Eingangsgröße bestimmten Gewichtungsfaktor gewichteten Werte der Eingangsgrößen und dem dem Neuron vorgegebenen Offsetwert (p3[j]) berechnet wird und das Ergebnis mit einer Aktivierungsfunktion (act) transformiert wird, um die Ausgangsgröße für das Neuron (20) zu erhalten,
wobei das Steuergerät eingerichtet ist, erfasste Sensorsignale (S) als Eingangsgrößenvektor (ut) bereitzustellen und abhängig von einer berechneten Ausgangsgröße der Modellberechnungseinheit (22) eine Ansteuergröße (A) an das Motorsystem (1) anzulegen.

2. Verwendung des Steuergeräts (2) nach Anspruch 1, wobei der Rechenkern eine Zustandsmaschine (11), einen Speicher (12) zum Speichern der einen oder mehreren Eingangsgrößen des Eingangsgrößenvektors, der Gewichtungsmatrix, der für jedes Neuron (20) vorgegebenen Offsetwerten (p3[j]) und der Ausgangsgrößen für jedes Neuron (20), einen oder mehrere Rechenoperationsblöcke (13, 14), insbesondere einem MAC-Block und einem Aktivierungsfunktions-Berechnungsblock, umfasst.

3. Verwendung des Steuergeräts (2) nach Anspruch 1 oder 2, wobei der Rechenkern ausgebildet ist, um abhängig von einer Auswahlgröße (cfg_activation_function) eine Art der Aktivierungsfunktion für das mehrschichtigen Perzeptronenmodell auszuwählen.

4. Verwendung des Steuergeräts (2) nach einem der Ansprüche 1 bis 3, wobei die Aktivierungsfunktionen (act) eine Knickfunktion, eine Sigmoidfunktion, eine Tangens-Hyberbolicus-Funktion oder eine lineare Funktion umfasst.

5. Verwendung des Steuergeräts (2) nach einem der Ansprüche 1 bis 4, wobei der Rechenkern in einem Flächenbereich eines integrierten Bausteins ausgebildet ist.

6. Verwendung des Steuergeräts (2) nach einem der vorhergehenden Ansprüche, wobei das Steuergerät (2) als eine integrierte Schaltung ausgebildet ist.

**Claims**

1. Use of a control device (2) comprising a microprocessor (21) and one or more model calculating units (22) as a control device (2) for controlling an engine system (1) in a motor vehicle,

wherein the model calculating unit (22) is designed for calculating a layer of a multilayer perceptron model with a hardwired computing core formed in hardware for calculating a fixedly predefined computing algorithm in coupled functional blocks,
wherein the computing core is designed, for a neuron layer of a multilayer perceptron model having a number of neurons (20), to calculate an output variable for each neuron (20) depending on one or more input variables of an input variable vector (ut), a weighting matrix having weighting factors, and an offset value (p3[j]) predefined for each neuron (20), wherein for each neuron (20) a sum of the values of the input variables weighted with a weighting factor - determined by the neuron (20) and the input variable - and the offset value (p3[j]) predefined for the neuron is calculated and the result is transformed with an activation function (act) in order to obtain the output variable for the neuron (20),
wherein the control device is configured to provide detected sensor signals (S) as input variable vector (ut) and to apply a control variable (A) to the engine system (1) depending on a calculated output variable of the model calculating unit (22).

2. Use of the control device (2) according to Claim 1, wherein the computing core comprises a state machine (11), a memory (12) for storing the one or more input variables of the input variable vector, the weighting matrix, the offset values (p3[j]) predefined for each neuron (20), and the output variables for each neuron (20), and one or more computing operation blocks (13, 14), in particular an MAC block and an activation function calculating block.

3. Use of the control device (2) according to Claim 1 or 2, wherein the computing core is designed to select a type of activation function for the multilayer perceptron model depending on a selection variable (cfg_activation_function).

4. Use of the control device (2) according to any of Claims 1 to 3, wherein the activation function (act) comprises a kink function, a sigmoid function, a hyperbolic tangent function or a linear function.

5. Use of the control device (2) according to any of Claims 1 to 4, wherein the computing core is formed in a surface region of an integrated chip.

6. Use of the control device (2) according to any of the preceding claims, wherein the control device (2) is formed as an integrated circuit.

**Revendications**

1. Utilisation d'un appareil de commande (2) pourvu d'un microprocesseur (21) et d'une ou de plusieurs unités de calcul de modèle (22) comme un appareil de commande (2) pour commander un système de moteur (1) dans un véhicule automobile,

dans laquelle l'unité de calcul de modèle (22) est réalisée pour le calcul d'une couche d'un modèle de perceptron multicouche pourvu d'un moteur de calcul câblé, réalisé sous forme de matériel, pour calculer un algorithme de calcul prédéfini de manière fixe dans des blocs de fonction couplés,
dans laquelle le moteur de calcul est réalisé pour calculer une grandeur de sortie pour chaque neurone (20) pour une couche de neurones d'un modèle de perceptron multicouche pourvu d'un certain nombre de neurones (20), en fonction d'une ou de plusieurs grandeurs d'entrée d'un vecteur de grandeurs d'entrée (ut), d'une matrice de pondération pourvue de facteurs de pondération, et d'une valeur de décalage (p3[j]) prédéfinie pour chaque neurone (20), dans laquelle pour chaque neurone (20), une somme des valeurs, pondérées par un facteur de pondération déterminé par le neurone (20) et la grandeur d'entrée, des grandeurs d'entrée et de la valeur de décalage (p3[j]) prédéfinie pour le neurone est calculée, et le résultat est transformé par une fonction d'activation (act) afin d'obtenir la grandeur de sortie pour le neurone (20),
dans laquelle l'appareil de commande est conçu pour fournir des signaux de capteur (S) détectés sous forme de vecteur de grandeurs d'entrée (ut) et pour appliquer une grandeur de pilotage (A) au système de moteur (1) en fonction d'une grandeur de sortie calculée de l'unité de calcul de modèle (22).

2. Utilisation de l'appareil de commande (2) selon la revendication 1, dans laquelle le moteur de calcul comprend une machine d'états (11), une mémoire (12) pour stocker ladite une ou les plusieurs grandeurs d'entrée du vecteur de grandeurs d'entrée, la matrice de pondération, les valeurs de décalage (p3[j]) prédéfinis pour chaque neurone (20), et les grandeurs de sortie pour chaque neurone (20), un ou plusieurs blocs d'opération de calcul (13, 14), en particulier un bloc MAC et un bloc de calcul de fonction d'activation.

3. Utilisation de l'appareil de commande (2) selon la revendication 1 ou 2, dans lequel le moteur de calcul est réalisé pour sélectionner un type de la fonction d'activation pour le modèle de perceptron multicouche en fonction d'une grandeur de sélection (cfg_activation_function).

4. Utilisation de l'appareil de commande (2) selon l'une quelconque des revendications 1 à 3, dans lequel la fonction d'activation (act) comprend une fonction de coude, une fonction sigmoïde, une fonction de tangente hyperbolique ou une fonction linéaire.

5. Utilisation de l'appareil de commande (2) selon l'une quelconque des revendications 1 à 4, dans lequel le moteur de calcul est réalisé dans une partie de surface d'un module intégré.

6. Utilisation de l'appareil de commande (2) selon l'une quelconque des revendications précédentes, dans lequel l'appareil de commande (2) est réalisé comme un circuit intégré.

**FIG. 1**

**FIG. 2**

# FIG. 3

# FIG. 4a

# FIG. 4b

# FIG. 4c

# FIG. 4d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **TURKSON et al.** Artificial neural network applications in the calibration of spark-ignition engines: An overview. *ENGINEERING SCIENC AND TECHNOLOGY, AN INTERNATIONAL JOURNAL,* 16. April 2016, vol. 19 (3), 1346-1359

- High speed neural network chip for trigger purposes in high energy physics. **EPPLER et al.** DESIGN, AUTOMATION AND TEST IN EUROPE, 1998, PROCEEDINGS PARIS, FRANCE, 23-26 FEB. 1998, LOS ALAMITOS, CA, USA. IEEE COMPUT. SOC, 23. Februar 1998, 108-115